Europäisches Patentamt

European Patent Office

Office européen des brevets

(11) Veröffentlichungsnummer: **0 355 477**

**A1**

(12) **EUROPÄISCHE PATENTANMELDUNG**

(21) Anmeldenummer: **89114017.0**

(22) Anmeldetag: **28.07.89**

(51) Int. Cl.⁴ **G21F 9/00 , G21C 13/06**

(30) Priorität: **12.08.88 DE 3827475**

(43) Veröffentlichungstag der Anmeldung:
**28.02.90 Patentblatt 90/09**

(84) Benannte Vertragsstaaten:
**BE CH DE ES FR LI NL SE**

(71) Anmelder: **Siemens Aktiengesellschaft**
**Wittelsbacherplatz 2**
**D-8000 München 2(DE)**

(72) Erfinder: **Bertholdt, Horst-Otto**
**Hubertusstrasse 4**
**D-8551 Heroldsbach(DE)**
Erfinder: **Wille, Harald, Dr.**
**Konrad-Haussner-Strasse 16**
**D-8520 Erlangen(DE)**

(54) **Verfahren und Einrichtung zur Dekontamination des Primärsystems eines Kernkraftwerkes.**

(57) Die Erfindung betrifft ein Verfahren und eine Einrichtung zur Dekontamination des Primärsystems eines Kernkraftwerkes. Das Primärsystem besteht aus einem Reaktordruckbehälter (1), der Stutzen (11 bis 14) aufweist, an die Leitungspaare (21, 22 und 31, 32) von Dampferzeugern (2, 3) angeschlossen sind. Zur Dekontamination wird dem Primärsystem eine Dekontaminationslösung zugeführt, die mit Hauptkühlmittelpumpen (23, 33) durch das Primärsystem geleitet wird. Es ist vorgesehen, daß nach dem Entladen des Reaktordruckbehälters (1) und vor der Zuführung der Dekontaminationslösung der Reaktordruckbehälter (1) unterhalb der Stutzen (11 bis 14) in seinem Querschnitt verschlossen wird. Dazu dient eine Trennmembrane (4), die auf einer Wasserfüllung schwimmend anzuordnen ist und einen Dichtwulst (41) aufweist zum Abdichten gegen die Innenwand des Reaktordruckbehälters (1). Außerdem können den Dampferzeugern (3) zugeordnete Stutzen (13 und 14) am Reaktordruckbehälter (1) vor der Zuführung der Dekontaminationslösung verschlossen werden. Dazu dienen Stopfen (6). Mit wenig Dekontaminationslösung ist eine gezielte Reinigung des oberen Teiles (17) des Reaktordruckbehälters (1) und ausgewählter Dampferzeuger (2) durchführbar.

Xerox Copy Centre

## Verfahren und Einrichtung zur Dekontamination des Primärsystems eines Kernkraftwerkes

Die Erfindung betrifft ein Verfahren zur Dekontamination des Primärsystems eines Kernkraftwerkes, das einen Reaktordruckbehälter mit Stutzen, an diese über Hauptkühlmittelpumpen enthaltende Leitungspaare, die jeweils aus einer Zuleitung und einer Ableitung gebildet sind, angeschlossene Dampferzeuger und ein zwischen einer Zuleitung zu einem Dampferzeuger und Ableitungen der Dampferzeuger angeschlossenes Volumen-Regelsystem umfaßt, wobei dem Primärsystem eine Dekontaminationslösung zugeführt wird, die dann mit den Hauptkühlmittelpumpen des Primärsystems durch das Primärsystem geleitet wird.

Ein Verfahren zur Dekontamination des Primärsystems eines Kernkraftwerkes ist aus der veröffentlichten europäischen Patentanmeldung 0 160 831 bekannt. Dabei werden die Kontaminationslösungen direkt in das Primärkühlmittel eingebracht und mit den vorhandenen Kühlmittelpumpen durch das Primärsystem gepumpt. Nach erfolgter Reinigung der Komponenten des Primärsystems wird das Dekontaminationsmittel enthaltende Primärkühlwasser innerhalb der Kraftwerksanlage beispielsweise mittels eines Anionentauschers oder eines Kationentauschers gereinigt.

Mit dem bekannten Verfahren wird stets der gesamte Primärkreislauf gereinigt. Die Reinigung umfaßt den gesamten entladenen Reaktordruckbehälter, in dem sich Einbauten befinden. Außerdem werden zusammen mit dem Reaktordruckbehälter stets die Primärbereiche aller Dampferzeuger, die mit dem Reaktordruckbehälter über Leitungen verbunden sind, gereinigt. Die Reinigung umfaßt außerdem alle Leitungen des Primärsystems und die Hauptkühlmittelpumpen, sowie vorhandene Armaturen. Die Dekontamination des gesamten Primärsystems eines Kernkraftwerkes erfordert aber eine große Menge Dekontaminationschemikalien, was dann auch sehr viel Reinigungslösung und abgelöste Aktivität, die nach der Reinigung entsorgt werden muß, zur Folge hat. Andererseits ist manchmal nur eine teilweise Reinigung des Primärsystems erforderlich. Beispielsweise reicht es oft aus, nur einen Teil der Dampferzeuger zu reinigen und im Reaktordruckbehälter nur den oberen Bereich, an dem die Stutzen für die Dampferzeugerleitungen angeordnet sind, zu dekontaminieren.

Der Erfindung lag die Aufgabe zugrunde, ein Verfahren und eine Einrichtung zur Dekontamination des Primärsystems eines Kernkraftwerkes zu entwickeln, die ohne zusätzliche externe Hilfskreisläufe eine Dekontamination des Primärsystems eines Kernkraftwerkes ermöglichen mit Ausnahme des unteren Teiles des Reaktordruckbehälters, der Kerneinbauten enthält. Außerdem sollen statt aller Dampferzeuger gezielt bestimmte Dampferzeuger des Primärsystems zusammen mit ihren Leitungen und den zugeordneten Hauptkühlmittelpumpen dekontaminierbar sein.

Die Aufgabe wird erfindungsgemäß dadurch gelöst, daß nach dem Entladen von Brennelementen aus dem Reaktordruckbehälter und vor der Zuführung der Dekontaminationslösung der Reaktordruckbehälter unterhalb der Stutzen in seinem Querschnitt verschlossen wird.

Damit wird der Vorteil erzielt, daß die Dekontaminationslösung in den unteren Teil des Reaktordruckbehälters, dessen Dekontamination nicht immer erforderlich ist, nicht vordringen kann. Die Reinigung wird auf den oberen Teil des Reaktordruckbehälters und auf die Dampferzeuger, sowie die Leitungen und Hauptkühlmittelpumpen begrenzt. Bei Einsatz des erfindungsgemäßen Verfahrens kommt man mit weit weniger Dekontaminationslösung als beim Be kannten aus. Bedingt dadurch fällt weniger kontaminierter Abfall an, der beseitigt werden muß. Mit dem erfindungsgemäßen Dekontaminationsverfahren wird die Dekontamination nur eines Teiles des Reaktordruckbehälters ermöglicht.

Beispielsweise wird ein Stutzen, an den eine Leitung eines Dampferzeugers angeschlossen ist, vor der Zuführung der Dekontaminationslösung verschlossen. Bei Verschließen beider Leitungen eines Dampferzeugers gelangt keine Dekontaminationslösung in diesen Dampferzeuger, sowie in die mit ihm verbundenen Leitungen und in die ihm zugeordnete Hauptkühlmittelpumpe. Durch Verschließen der zugeordneten Stutzen können auch mehrere Dampferzeuger zusammen mit Leitungen und Hauptkühlmittelpumpen von der Dekontamination ausgenommen werden. Auch durch das Verschließen von nur der Zuleitung oder nur der Ableitung eines Dampferzeugers wird der Kühlmittelumlauf durch diesen Dampferzeuger unterbrochen. Damit wird der Vorteil erzielt, daß nicht zu inspizierende Dampferzeuger von der Reinigung auszunehmen sind. Eine Dekontamination kann gezielt in einem oder in mehreren Dampferzeugern durchgeführt werden, während andere Dampferzeuger noch nicht gereinigt werden. Damit erzielt man eine weitere Verminderung des notwendigen Chemikalieneinsatzes und eine weitere Abfallreduzierung.

Nicht verschlossen werden Stutzen, über die Kühlmittel dem Volumen-Regelsystem zugeführt und von ihm abgezogen wird, da dessen Funktion nicht beeinträchtigt werden darf. Im übrigen ist in der Regel im Volumen-Regelsystem die Einspeisestelle für Dekontaminationschemikalien angeordnet.

Beispielsweise wird die Dekontaminationslö-

2

sung, nachdem sie durch das Primärsystem geleitet worden ist, innerhalb der Kraftwerksanlage gereinigt. Dazu können beispielsweise Ionenaustauscher eingesetzt sein. Externe Dekontaminationskreisläufe und Reinigungseinrichtungen sind daher nicht erforderlich und die Belastung des Personals wird reduziert.

Eine Einrichtung zur Durchführung des erfindungsgemäßen Verfahrens zur Dekontamination des Primärsystems eines Kernkraftwerkes weist eine Trennmembrane auf, die im Reaktordruckbehälter unterhalb der Mündungen der Stutzen den gesamten Querschnitt des Reaktordruckbehälters überspannend anzuordnen ist. Die Trennmembrane besteht beispielsweise aus Edelstahl oder aus Kunststoff und Edelstahl. Damit wird der Vorteil erzielt, daß der gesamte untere Teil des Reaktordruckbehälters, wo sich noch Kerneinbauten befinden können, verschlossen ist. Die Dekontaminationslösung kann daher in den unteren Teil nicht eindringen. Da das Volumen des unteren Teiles des Reaktordruckbehälters, das ungefähr zwei Drittel des Gesamtvolumens entspricht, aufgrund der erfindungsgemäßen Einrichtung nicht mit Dekontaminationslösung gefüllt werden muß, erzielt man eine erhebliche Einsparung von Dekontaminationslösung.

An die Trennmembrane ist beispielsweise am Umfang ein aufblasbarer, an die Innenwand des Reaktordruckbehälters anpreßbarer Dichtwulst angeformt. Nach Aufblasen dieses Dichtwulstes schließt die Trennmembrane mit der Innenwand des Reaktordruckbehälters dicht ab.

Nach einem anderen Beispiel sind am Umfang der Trennmembrane Halteklammern angeordnet, die in die Stutzen am Reaktordruckbehälter von innen einführbar sind. Mit diesen Halteklammern wird die Trennmembrane fixiert.

In der Regel ist die montierte Trennmembrane bei abgesenktem Wasserspiegel im Reaktordruckbehälter auf der Wasseroberfläche abgestützt und an der Innenoberfläche des Reaktordruckbehälters dicht anliegend angeordnet. Die Abdichtung erfolgt dabei beispielsweise durch den genannten aufblasbaren Dichtwulst. Dadurch, daß die Trennmembrane auf der Wasseroberfläche aufliegt, wird die Trennmembrane in ihrer Position weitgehend fixiert. Ein Abrutschen der Trennmembrane in den unteren Teil des Reaktordruckbehälters ist ausgeschlossen, da sie aufgrund des Auftriebes auf der Wasseroberfläche schwimmt. Die Halteklammern dienen dann nur noch zur zusätzlichen Fixierung. Mit der Anordnung der Trennmembrane auf der Wasseroberfläche wird der Vorteil erzielt, daß die Trennmembrane stets zuverlässig fest positioniert ist.

Beispielsweise weist die Trennmembrane eine Öffnung auf zur Kompensation der wärmebedingten Ausdehnung des Wassers im Reaktordruckbehälter. Damit wird eine stabile Lage der Trennmembrane auch dann gewährleistet, falls durch Temperaturunterschiede zwischen dem oberen und dem unteren Teil des Reaktordruckbehälters vom Wasser ein geringfügiger Druck auf die Trennmembrane ausgeübt würde. In diesem nur selten zu erwartenden Fall erfolgt dann ein Druckausgleich durch die Öffnung in der Trennmembrane.

Die Einrichtung zur Durchführung des erfindungsgemäßen Verfahrens weist beispielsweise zumindest in einen Stutzen, an den eine Leitung eines Dampferzeugers angeschlossen ist, Stopfen auf, die den gesamten Querschnitt der Stutzen ausfüllen. Durch den Einsatz von Stopfen in einem Stutzenpaar, das einem bestimmten Dampferzeuger zugeordnet ist, wird verhindert, daß die Dekontaminationslösung diesen Dampferzeuger durchströmt. Damit wird der Vorteil erzielt, daß der Umlauf von Dekontaminationslösung auf bestimmte auswählbare Dampferzeuger zu begrenzen ist. Es kann gezielt außer dem oberen Teil des Reaktordruckbehälters nur ein Dampferzeuger zusammen mit den ihm zugeordneten Leitungen und der zugeordneten Hauptkühlmittelpumpe dekontaminiert werden. Falls in nur einem Dampferzeuger eine Dekontamination erforderlich ist, kommt man beim Einsatz der erfindungsgemäßen Einrichtung mit nur sehr wenig Dekontaminationslösung aus, da die übrigen Dampferzeuger nicht durchströmt werden. Entsprechend können bei Bedarf statt aller vier in der Regel vorhandenen Dampferzeuger auch zwei oder drei Dampferzeuger gleichzeitig dekontaminiert werden.

Beim Anbringen der Stopfen ist darauf zu achten, daß die Zuleitung des Volumen-Regelsystems, in dem auch die Reinigung des Kühlmittels erfolgt, nicht durch Anbringen von Stopfen vom Reaktordruckbehälter abgetrennt wird. Da vom Volumen-Regelsystem ausgehend mehrere absperrbare Ableitungen, und zwar in die Leitungen jedes Dampferzeugers vorhanden sind, erfolgt die Einspeisung vom Volumen-Regelsystem aus jeweils in nicht verschlossene Ableitungen von Dampferzeugern.

Mit dem erfindungsgemäßen Verfahren und der Einrichtung zur Durchführung dieses Verfahrens wird insbesondere der Vorteil erzielt, daß gezielt nur der obere Teil des Reaktordruckbehälters und nur ausgewählte Dampferzeuger getrennt vom unteren Teil des Reaktordruckbehälters und getrennt von den übrigen Dampferzeugern zu dekontaminieren sind. Man kommt mit wenig Dekontaminationslösung aus, wodurch auch nur wenig zu entsorgender Abfall anfällt. Der Umlauf von Dekontaminationslösung im Primärkreislauf eines Kernkraftwerkes wird auf das erforderliche Maß begrenzt.

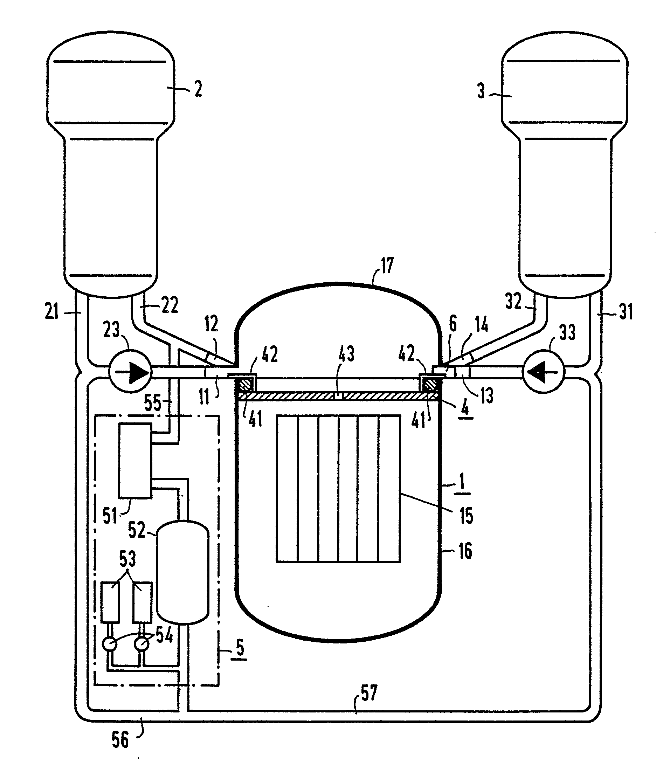

Die Erfindung wird anhand der Zeichnung näher erläutert:

Die Zeichnung zeigt einen Reaktordruckbehälter, der mit Dampferzeugern verbunden ist und der erfindungsgemäß eine Trennmembrane und in einem Stutzenpaar Stopfen aufweist.

Die Zeichnung zeigt einen Reaktordruckbehälter 1, der mit zwei Dampferzeugern 2 und 3 und mit einem Volumen-Regelsystem 5 verbunden ist. Über das Volumen-Regelsystem 5 erfolgt die Entnahme, Reinigung und Rückspeisung von Wasser aus dem Primärkreislauf und auch die Zugabe von Dekontaminationschemikalien. Dazu zweigt von einer Zuleitung 22 eines Dampferzeugers 2 eine Zuleitung 55 des Volumen-Regelsystems 5 ab, die mit einem Ionenaustauscher 51 verbunden ist. Dieser ist mit einem Volumenausgleichsbehälter 52 verbunden. Vom Volumenausgleichsbehälter 52 gehen Ableitungen 56,57 aus, die mit den Ableitungen 21, 31 der Dampferzeuger 2, 3 verbunden sind. In Strömungsrichtung hinter dem Volumenausgleichsbehälter 52 ist eine Einspeiseleitung von mit Armaturen 54 verschließbaren Chemikalienvorratsbehältern 53 zugeführt.

In der üblichen Ausführungsform ist ein Reaktordruckbehälter 1 mit drei oder vier, beispielsweise mit zwei Dampferzeugern 2 und 3 verbunden. Am Reaktordruckbehälter 1 sind für jeden Dampferzeuger 2 und 3 zwei Stutzen 11, 12 und 13, 14 angeformt, die alle auf der gleichen Umfangslinie am Reaktordruckbehälter 1 liegen. Mit jeweils zwei Stutzen 11, 12 und 13, 14 ist ein Leitungspaar 21, 22 und 31, 32 aus Zuleitung 22, 32 und Ableitung 21, 31 verbunden, das mit jeweils einem Dampferzeuger 2 und 3 in Verbindung steht. In den Ableitungen 21 und 31 sind Hauptkühlmittelpumpen 23 und 33 angeordnet. Zur Dekontamination ist der Reaktordruckbehälter 1 entladen. In ihm befinden sich aber noch Kernstrukturen 15, wie das Haltegitter für die Brennelemente. Damit das erfindungsgemäße Dekontaminationsverfahren durchgeführt werden kann, ist im Reaktordruckbehälter 1 unterhalb der Mündungen der Stutzen 11 bis 14 eine Trennmembrane 4 angeordnet. Diese überspannt den gesamten Querschnitt des Reaktordruckbehälters 1. Am Umfang der Trennmembrane 4 ist ein aufblasbarer Dichtwulst 41 angeformt. Außerdem sind an der Trennmembrane 4 Halteklammern 42 angebunden, die in die Stutzen 11 bis 14 von innen einführbar sind. Der Dichtwulst 41 schließt im aufgeblasenen Zustand die Trennmembrane 4 dicht mit der Wand des Reaktordruckbehälters 1 ab. Zur Dekontamination ist der entladene Reaktordruckbehälter 1 bis wenig unterhalb der Stutzen 11 bis 14 mit Wasser gefüllt. Die Trennmembrane 4 schwimmt auf der Oberfläche des Wassers und wird dadurch in ihrer Lage stabilisiert. Zum Ausgleich von Druckunterschieden in den beiden Teilen 16 und 17 des Reaktordruckbehälters 1, dem unteren mit Wasser gefüllten Teil 16 und dem oberen von Dekontaminationslösung durchströmten Teil 17 weist die Trennmembrane 4 eine Öffnung 43 auf.

Die Stutzen 13 und 14 eines Dampferzeugers 3 sind durch Stopfen 6 verschlossen. Dadurch wird der Dampferzeuger 3 vom Dekontaminationsprozeß ausgenommen. Die Dekontaminationslösung wird nur durch den oberen Teil 17 des Reaktordruckbehälters 1 und den nicht abgeschlossenen Dampferzeuger 2 geführt. Die Umwälzung der Dekontaminationslösung erfolgt dabei mit vorhandenen Systemen des Kraftwerkes, insbesondere mit der Hauptkühlmittelpumpe 23 des durchströmten Dampferzeugers 2. Nicht verschlossen ist ein Stutzen 12, über den Kühlmittel dem Volumen-Regelsystem 5 zugeleitet wird. Auch ein Stutzen 11, über den die Rückspeisung aus dem Volumen-Regelsystem 5 erfolgt, bleibt offen.

Zur Durchführung des erfindungsgemäßen Verfahrens wird zunächst der Reaktordruckbehälter 1 entladen. Dann wird der Reaktordruckbehälter 1 bis wenig unter die Mündungen der Stutzen 11 bis 14 mit Wasser gefüllt. Dann wird beispielsweise mit einem Handhabungsgerät die Trennmembrane 4 auf der Wasseroberfläche im Reaktordruckbehälter 1 positioniert und zusätzlich mit Halteklammern 42 in den Stutzen 11 bis 14 gehalten. Die Abdichtung der Trennmembrane 4 gegen die Wand des Reaktordruckbehälters 1 erfolgt durch Aufblasen des Dichtwulstes 41. Danach werden diejenigen Dampferzeuger 3, deren Dekontamination momentan nicht vorgesehen ist, durch Stopfen 6 vom Reaktordruckbehälter 1 abgetrennt, die vom Reaktordruckbehälter 1 aus beispielsweise mit Handhabungsgeräten in die Stutzen 13 und 14 eingeführt werden, die diesen Dampferzeugern 3 zugeordnet sind. Danach wird eine Dekontaminationslösung in den Primärkreislauf des Kernkraftwerkes eingebracht. Mittels der Hauptkühlmittelpumpen 23, der nicht abgeschlossenen Dampferzeuger 2 erfolgt ein Umwälzen der Dekontaminationslösung durch den oberen Teil 17 des Dampferzeugers 1 und durch die nicht durch Stopfen 6 abgeschlossenen Dampferzeuger 2. Danach wird die Dekontaminationslösung entnommen. Eine Reinigung kann in Kernkraftwerken durch Ionenaustauscher erfolgen.

## Ansprüche

1. Verfahren zur Dekontamination des Primärsystems eines Kernkraftwerkes, das einen Reaktordruckbehälter (1) mit Stutzen (11 bis 14), an diese über Hauptkühlmittelpumpen (23, 33) enthaltende Leitungspaare, die jeweils aus einer Zuleitung (22, 32) und einer Ableitung (21, 31) gebildet sind, angeschlossene Dampferzeuger (2, 3) und ein zwischen einer Zuleitung (22) zu einem Dampferzeuger (2) und Ableitungen (21 und 31) der Dampferzeuger (2 und 3) angeschlossenes Volumen-Regelsystem (5) umfaßt, wobei dem Primärsystem eine Dekontaminationslösung zugeführt wird, die dann mit den Hauptkühlmittelpumpen (23, 33) des Primärsystems durch das Primärsystem geleitet wird, **dadurch gekennzeichnet,** daß nach dem Entladen von Brennelementen aus dem Reaktordruckbehälter (1) und vor der Zuführung der Dekontaminationslösung der Reaktordruckbehälter (1) unterhalb der Stutzen (11 bis 14) in seinem Querschnitt verschlossen wird.

2. Verfahren nach Anspruch 1, **dadurch gekennzeichnet,** daß zumindest ein Stutzen (13), an den eine Leitung (31) eines Dampferzeugers (3) angeschlossen ist, aber nicht ein Stutzen (12) über den Kühlmittel dem Volumen-Regelsystem (5) zugeführt wird und nicht ein weiterer Stutzen (11), über den Kühlmittel aus dem Volumen-Regelsystem (5) abgezogen wird, vor der Zuführung der Dekontaminationslösung verschlossen werden.

3. Verfahren nach den Ansprüchen 1 und 2, **dadurch gekennzeichnet,** daß die Dekontaminationslösung, nachdem sie durch das Primärsystem geleitet worden ist, innerhalb der Kraftwerksanlage gereinigt wird.

4. Einrichtung zur Durchführung des Verfahrens zur Dekontamination des Primärsystems eines Kernkraftwerkes nach den Ansprüchen 1 und 3, wobei das Primärsystem einen Reaktordruckbehälter (1) umfaßt, an den Stutzen (11 bis 14) angeformt sind, die mit Leitungspaaren, die jeweils aus einer Zuleitung (22, 32) und einer Ableitung (21, 31) gebildet sind, verbunden sind, wovon jedes Paar über eine Hauptkühlmittelpumpe (23, 33) mit einem Dampferzeuger (2, 3) verbunden ist, und wobei von einer Zuleitung (22) zu einem Dampferzeuger (2) eine Zuleitung (55) zu einem Volumen-Regelsystem (5) abzweigt, von dem Ableitungen (56 und 57) zu Ableitungen (21 und 31) der Dampferzeuger (2 und 3) ausgehen, **dadurch gekennzeichnet,** daß im Reaktordruckbehälter (1) unterhalb der Mündungen der Stutzen (11 bis 14) den gesamten Querschnitt des Reaktordruckbehälters (1) überspannend eine Trennmembrane (4) angeordnet ist.

5. Einrichtung nach Anspruch 4, **dadurch gekennzeichnet,** daß am Umfang der Trennmembrane (4) ein aufblasbarer Dichtwulst (41) angeformt ist.

6. Einrichtung nach den Ansprüchen 4 und 5, **dadurch gekennzeichnet,** daß am Umfang der Trennmembrane (4) Halteklammern (42) angeordnet sind, die in die Stutzen (11 bis 14) am Reaktordruckbehälter (1) von innen einführbar sind.

7. Einrichtung nach den Ansprüchen 4 bis 6, **dadurch gekennzeichnet,** daß die Trennmembrane (4) im bis unterhalb der Mündungen der Stutzen (11 bis 14) mit Wasser gefüllten Reaktordurckbehälter (1) auf der Wasseroberfläche abgestützt angeordnet ist.

8. Einrichtung nach Anspruch 7, **dadurch gekennzeichnet,** daß die Trennmembrane (4) eine Öffnung (43) aufweist zur Kompensation von Druckunterschieden.

9. Einrichtung nach den Ansprüchen 4 bis 8 zur Durchführung des Verfahrens nach den Ansprüchen 1 bis 3, **dadurch gekennzeichnet,** daß zumindest in einem Stutzen (13) aber nicht im Stutzen (12), mit dem eine Zuleitung (55) zum Volumen-Regelsystem (5) in Verbindung steht und nicht in mindestens einem der Stutzen (11, 13) mit denen Ableitungen (56, 57) des Volumen-Regelsystems (5) in Verbindung stehen, den Querschnitt der Stutzen (13) ausfüllende Stopfen (6) angeordnet sind.

88 P 3341

**Europäisches Patentamt**

# EUROPÄISCHER RECHERCHENBERICHT

Nummer der Anmeldung

EP 89 11 4017

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | KERNENERGIE, Band 28, Nr. 8, August 1985, Seiten 333-337; K. OERTEL: "Ergebnisse der Ausarbeitung von Methoden und Vorrichtungen zur Dekontamination von Ausrüstungen und Räumen in Kernkraftwerken" * Seite 333, rechte Spalte, Absatz 3; Seite 334, linke Spalte, Absatz 2.2: "Dekontamination einzelner Primärkreislaufaggregate ohne Demontage" * | 1-3 | G 21 F 9/00 G 21 C 13/06 |
| A | IDEM --- | 4 | |
| Y,D | EP-A-0 160 831 (SIEMENS) * Figur 1; Seite 3, Zeile 32 - Seite 4, Zeile 23; Anspruch 9 * | 1-3 | |
| A | --- | 4 | |
| A | CA-A-1 062 590 (S.R. HATCHER et al.) * Figur 1; Seite 8, Zeilen 17-18 * --- | 1-3 | |
| A | DE-A-1 240 191 (CEA) * Figur; Spalte 2, Zeilen 30-38 * --- | 4 | G 21 F G 21 C G 21 D |
| A | FR-A-2 189 821 (WESTINGHOUSE) * Figur 2; Seite 3, Zeilen 26-29 * --- | 5 | |
| A | US-A-4 470 952 (M. VASSALOTTI) * Figuren 3,4; Spalte 2, Zeilen 65-66 * --- | 7 | |
| A | FR-A-2 425 589 (KWU) * Figur 1; Seite 7, Zeilen 18-21 * ----- | 9 | |

**RECHERCHIERTE SACHGEBIETE (Int. Cl.5)**

Der vorliegende Recherchenbericht wurde für alle Patentansprüche erstellt

| Recherchenort | Abschlußdatum der Recherche | Prüfer |
|---|---|---|
| DEN HAAG | 07-11-1989 | FRITZ S.C. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)